# EUROPÄISCHE PATENTANMELDUNG

(11) **EP 2 738 268 A1**
(43) Veröffentlichungstag der Anmeldung: **04.06.2014**
(21) Anmeldenummer: 12194795.6
(22) Anmeldetag: 29.11.2012
(51) Int. Cl.: C21B 5/06, C21B 7/00

(54) **Verfahren zur Reduktion von Metalloxiden zu metallisiertem Material in einem Direktreduktionsprozess.**

(71) Anmelder: Siemens VAI Metals Technologies GmbH, 4031 Linz (AT)
(72) Erfinder: Fischer, Harald, 4020 Linz (AT); Millner, Robert, 3382 Loosdorf (AT); Rosenfellner, Gerald, 3352 Ertl (AT)
(74) Vertreter: Maier, Daniel Oliver

(57) **Zusammenfassung**

Die Erfindung betrifft ein Verfahren und eine Vorrichtung zur Reduktion von Metalloxiden (33) durch Reduktionsgas (7) unter gleichzeitiger Bildung eines Topgases (6), umfassend die Herstellung einer ersten Komponente des Reduktionsgases (7) durch Reformierung einer ersten Teilmenge (38) des Topgases (6) in einem Reformer (5), die Herstellung einer zweiten Komponente des Reduktionsgases (7) durch Vorwärmung eines Produktgases (29) in einem Reduktionsgasofen (16), welches durch Entfernung von CO₂ aus einer zweiten Teilmenge (28) des Topgases (6) mittels einer CO₂-Entfernungsvorrichtung (11) gebildet wird, wobei die für die Reformierung der ersten Teilmenge (38) des Topgases (6) erforderliche Wärme durch Verbrennung eines Reformerbrenngases (26) geliefert wird, und die für die Vorwärmung des Produktgases (29) erforderliche Wärme durch Verbrennung eines Ofenbrenngases (31) geliefert wird, wobei dem Reformerbrenngas (26) und/oder dem Ofenbrenngas (31) ein bei der CO₂-Entfernung anfallendes Tailgas (14) zugeführt wird.

## Beschreibung

### Technisches Gebiet

Die Erfindung betrifft ein Verfahren und eine Vorrichtung zur Reduktion von Metalloxiden zu metallisiertem Material in einem Reduktionsaggregat durch Reduktionsgas unter gleichzeitiger Bildung eines Topgases. Das Verfahren umfasst die Herstellung einer ersten Komponente des Reduktionsgases durch katalytische Reformierung einer ersten Teilmenge des Topgases unter Zugabe von gasförmigen Kohlenwasserstoffen in einem Reformer, die Herstellung einer zweiten Komponente des Reduktionsgases durch Vorwärmung eines CO₂-armen Produktgases in einem Reduktionsgasofen, welches durch Entfernung von CO₂ aus einer zweiten Teilmenge des Topgases mittels einer CO₂-Entfernungsvorrichtung gebildet wird. Die für die katalytische Reformierung der ersten Teilmenge des Topgases erforderliche Wärme wird durch Verbrennung eines Reformerbrenngases geliefert.

### Stand der Technik

In der WO 2010123796 A1 ist ein Verfahren offenbart, bei dem ein aus einem Reduktionsaggregat stammendes Topgas in zwei Teilströme aufgeteilt wird. Der erste Teilstrom wird in einem Reformer unter Zugabe von Kohlenwasserstoffen zu Reduktionsgas reformiert, während der zweite Teilstrom in einer CO₂-Entfernungsvorrichtung einer CO₂-Wäsche unterzogen wird. Eine Teilmenge des bei der CO₂-Wäsche gebildeten CO₂-armen lean-Gases wird wieder in das Reduktionsaggregat eingebracht, eine andere Teilmenge des lean-Gases wird als Brenngas für den Reformer verwendet. Ein bei der CO₂-Wäsche anfallendes CO₂-reiches Tailgas wird sequestriert.

Die bei diesem Verfahren angewandte Methode der CO₂-Wäsche erfolgt unter Anwendung chemischer Lösungsmittel wie beispielsweise Alkanolamine, um einen für die Sequestrierung erforderlichen Mindestgehalt an CO₂ im Tailgas zu erhalten. Nachteilig dabei ist, dass solche Methoden der CO₂-Wäsche mit einem hohen Energieverbrauch für die Regenerierung des Lösungsmittels einhergehen. Dies führt zu großen Anlagen, hohem Lösungsmittelkonsum, hohem Energieverlust und letztlich zu erhöhten Betriebs- und Kapitalkosten.

### Zusammenfassung der Erfindung

### Technische Aufgabe

Es ist die Aufgabe der vorliegenden Erfindung, ein Verfahren und eine Vorrichtung bereitzustellen, mit dem die genannten Nachteile überwunden werden können.

### Technische Lösung

Diese Aufgabe wird gelöst durch ein Verfahren zur Reduktion von Metalloxiden zu metallisiertem Material in einem Reduktionsaggregat durch Reduktionsgas unter gleichzeitiger Bildung eines Topgases, umfassend die Herstellung einer ersten Komponente des Reduktionsgases durch katalytische Reformierung einer ersten Teilmenge des Topgases unter Zugabe von gasförmigen Kohlenwasserstoffen in einem Reformer, die Herstellung einer zweiten Komponente des Reduktionsgases durch Vorwärmung eines CO₂-armen Produktgases in einem Reduktionsgasofen, welches durch Entfernung von CO₂ aus einer zweiten Teilmenge des Topgases mittels einer CO₂-Entfernungsvorrichtung gebildet wird, wobei die für die katalytische Reformierung der ersten Teilmenge des Topgases erforderliche Wärme durch Verbrennung eines Reformerbrenngases geliefert wird. Erfindungsgemäß ist die CO₂-Entfernungsvorrichtung als PSA-Anlage oder als VPSA-Anlage ausgebildet und die für die Vorwärmung des CO₂-armen Produktgases erforderliche Wärme wird durch Verbrennung eines Ofenbrenngases geliefert, wobei dem Reformerbrenngas und/oder dem Ofenbrenngas ein bei der CO₂-Entfernung anfallendes CO₂-reiches Tailgas zugeführt wird.

Unter Metalloxide sind vorzugsweise Eisenoxide zu verstehen. Vorzugsweise wird das Topgas vor Aufteilung des Topgases in zumindest die erste Teilmenge und die zweite Teilmenge einer Entstaubung in einer Entstaubungseinrichtung unterzogen.

Bei der Reduktion von Metalloxiden zu metallisiertem Material in einem Reduktionsaggregat durch Reduktionsgas wird das Topgas gebildet. Die erste Komponente des Reduktionsgases wird durch katalytische Reformierung der ersten Teilmenge des Topgases unter Zugabe der gasförmigen Kohlenwasserstoffe im Reformer hergestellt. Bevorzugt wird die erste Teilmenge des Topgases vor dessen katalytischer Reformierung im Reformer einer Verdichtung in einem Prozessgasverdichter und/oder einer Vorwärmung in einem Rekuperator unterzogen.

Die katalytische Reformierung der ersten Teilmenge des Topgases erfolgt durch zumindest teilweise Umsetzung der gasförmigen Kohlenwasserstoffe mit Wasser (H₂O) und Kohlendioxid (CO₂) zu Wasserstoff (H₂) und Kohlenmonoxid (CO). Die für die Reformierung benötigten Substanzen H₂O und CO₂ können zumindest teilweise in der ersten Teilmenge des Topgases enthalten sein und/oder werden der ersten Teilmenge des Topgases vor dessen Reformierung zugesetzt. Beispielsweise erfolgt die Zusetzung des Wassers durch den Betrieb der Entstaubungseinrichtung als Topgas-Nasswäscher durch Regelung der Wasservorlauftemperatur.

Unter gasförmigen Kohlenwasserstoffen sind beispielsweise Erdgas, Methan, Propan, Syngas aus Kohlevergasung, Koksofengas, liquid natural gas - LNG - zu verstehen. Unter gasförmige Kohlenwasserstoffe sind auch die genannten gasförmigen Kohlenwasserstoffe enthaltende Gemische zu verstehen.

Bei der katalytischen Reformierung der ersten Teilmenge des Topgases im Reformer handelt es sich um einen endothermen Reformierungsprozess. Deshalb muss dem Reformer Wärme für die bei der Reformierung ablaufenden endothermen Reformierungsreaktionen zugeführt werden. Die für die katalytische Reformierung der ersten Teilmenge des Topgases erforderliche Wärme wird durch Verbrennung eines Reformerbrenngases geliefert. Vorzugsweise erfolgt die Verbrennung des Reformerbrenngases mit Luft oder auch mit technisch reinem Sauerstoff oder einer Mischung daraus.

Die Herstellung der zweiten Komponente des Reduktionsgases erfolgt durch die Vorwärmung des CO₂-armen Produktgases im Reduktionsgasofen. Die Vorwärmung des Produktgases im Reduktionsgasofen erfolgt mittels indirekten Wärmetausches. Das CO₂-arme Produktgas wird durch Entfernung des CO₂ aus der zweiten Teilmenge des Topgases mittels der CO₂-Entfernungsvorrichtung gebildet.

Vorzugsweise wird die zweite Teilmenge des Topgases vor der Entfernung des in ihm enthaltenen CO₂ einer Verdichtung in einem Recyclegasverdichter unterzogen.

Erfindungsgemäß ist die CO₂-Entfernungsvorrichtung als PSA-Anlage oder als VPSA-Anlage ausgebildet. PSA steht für pressure swing adsorption und VPSA steht für vacuum pressure swing adsorption.

Die für die Vorwärmung des CO₂-armen Produktgases erforderliche Wärme wird durch Verbrennung des Ofenbrenngases geliefert. Dem Reformerbrenngas und/oder dem Ofenbrenngas wird erfindungsgemäß das bei der CO₂-Entfernung anfallende CO₂-reiche Tailgas zugeführt. Das Reformerbrenngas und/oder das Ofenbrenngas umfasst damit zumindest einen Teil des Tailgases. Bei der Verbrennung entsteht ein Reformerabgas beziehungsweise ein Ofenabgas. Die Zufuhr des Tailgases zum Reformerbrenngas und/oder zum Ofenbrenngas erfolgt vorzugsweise mengengeregelt. Das Tailgas weist einen CO₂-Gehalt von 60 bis 80 Volumsprozent auf. Das Ofenbrenngas wird vorzugsweise mit Luft oder auch mit technisch reinem Sauerstoff oder einer Mischung daraus verbrannt.

Das Reformerbrenngas und/oder das Ofenbrenngas umfasst vorzugsweise eine dritte Teilmenge des Topgases.

Zur Heizwertvergleichmäßigung des Tailgases wird dieses vorzugsweise in einem Niederdruckgasspeicher gespeichert, bevor es dem Reformerbrenngas und/oder dem Ofenbrenngas zugeführt wird. Die Verbrennung des Reformerbrenngases beziehungsweise des Ofenbrenngases erfolgt mittels im Reformer und im Reduktionsgasofen angeordneter Brenner.

Vorteilhafte Wirkungen der Erfindung:
- Durch die Herstellung der zweiten Komponente des Reduktionsgases steht dem Verfahren zusätzliches Reduktionsgas zur Verfügung. Dadurch kann die Anlagenleistung, unter der ist die Menge des pro Zeiteinheit herstellbaren metallisierten Materials im Reduktionsaggregat zu verstehen, ohne Erweiterung der Kapazität des Reformers erhöht werden.
- Durch die Zufuhr des Tailgases, welches einen für die Sequestrierung zu niedrigen CO₂-Gehalt aufweist, zum Reformerbrenngas und/oder zum Ofenbrenngas wird der CO₂ - Gehalt im Reformerabgas beziehungsweise im Ofenabgas erhöht, wodurch das Reformerabgas und/oder das Ofenabgas entweder direkt oder gegebenenfalls nach einer Nachbehandlung sequestriert werden kann.
- Das Tailgas wird einer Nutzung als Reformerbrenngas und/oder als Ofenbrenngas unterzogen, wodurch ein effizientes Verfahren realisiert wird.
- Das erfindungsgemäße Verfahren ermöglicht die Verwendung von energieeffizienten PSA-Anlagen beziehungsweise VPSA-Anlagen bei gleichzeitiger Möglichkeit der Sequestrierung des Tailgases nach Verbrennung im Reformer oder im Reduktionsgasofen.
- Durch die mengengeregelte Zufuhr des Tailgases zum Reformerbrenngas kann der Heizwert des Reformerbrenngases gesenkt werden, wodurch auch die Temperatur einer bei der Verbrennung des Reformerbrenngases entstehenden Reformerbrenngasflamme gesenkt wird. Dies hat eine Reduktion des NOₓ - Gehaltes im Reformerabgas - und damit eine Reduktion der Umweltbelastung infolge einer Emission des Reformerabgases in die Umwelt zur Folge.
- Durch die Zufuhr des Tailgases zum Reformerbrenngas wird der CO₂-Gehalt im Reformerbrenngas erhöht. Dies führt auf Grund des guten Strahlungsverhaltens von CO₂ auch bei niedrigen Temperaturen der Reformerbrenngasflamme beziehungsweise des Reformerabgases zu einem guten Wärmeübergang zwischen der Reformerbrenngasflamme beziehungsweise dem Reformerabgas und der zu reformierenden ersten Teilmenge des Topgases.
- PSA-Anlagen beziehungsweise VPSA-Anlagen benötigen weniger Energie als Anlagen mit Lösungsmitteleinsatz.

In einer bevorzugten Ausführungsform des erfindungsgemäßen Verfahrens erfolgt in einer Verbrennungsvorrichtung eine weitere Erwärmung des im Reduktionsgasofen vorgewärmten Produktgases durch partielle Oxidation des Produktgases mit technisch reinem Sauerstoff.

Unter partieller Oxidation ist eine unterstöchiometrische Verbrennung des Produktgases mit dem technisch reinen Sauerstoff zu verstehen.

Dadurch können das Reduktionspotential und die Temperatur des Reduktionsgases genau an die momentanen Prozessbedingungen im Reduktionsaggregat angepasst werden.

In einer weiteren bevorzugten Ausführungsform des erfindungsgemäßen Verfahrens wird die zweite Teilmenge des Topgases vor der Entfernung des CO₂ einer CO - Konvertierungsreaktion in einem CO - Konvertierungsreaktor und/oder einer Abkühlung in einer Abkühlvorrichtung unterzogen.

Der Ausdruck "vor" ist im Sinne der Gasflussrichtung der zweiten Teilmenge des Topgases zu verstehen. Entweder wird die zweite Teilmenge des Topgases nur der CO-Konvertierungsreaktion oder nur der Abkühlung, oder der Konvertierungsreaktion und der Abkühlung unterzogen, wobei die zweite Teilmenge des Topgases bei letzterer Variante zuerst der CO-Konvertierungsreaktion und danach der Abkühlung unterzogen wird. Wird die zweite Teilmenge des Topgases einer CO-Konvertierungsreaktion unterzogen, so wird der zweiten Teilmenge des Topgases vor der CO-Konvertierungsreaktion vorzugsweise Wasserdampf, beispielsweise in Form von Dampf, zugemischt. Danach wird die zweite Teilmenge des Topgases einer Abkühlung unterzogen. Die abgekühlte Teilmenge des Topgases wird anschließend der CO₂ - Entfernung zugeführt.

Die CO - Konvertierungsreaktion ist auch unter den Namen CO - Shift oder Wassergas - Shift - Reaktion bekannt. Diese bekannte Reaktion dient dazu, den CO - Anteil in der zweiten Teilmenge des Topgases zu vermindern und gleichzeitig den H₂ - Anteil zu erhöhen, wobei gleichzeitig CO₂ gebildet wird.

Durch eine geregelte Zumischung von Wasserdampf zur zweiten Teilmenge des Topgases vor seiner CO - Konvertierungsreaktion, anschließender Abkühlung und nachfolgender CO₂-Entfernung kann das Reduktionspotential des Reduktionsgases gesteuert werden. Zusätzlich kann das Verhältnis von H₂ zu CO im Reduktionsgas gesteuert werden.

Durch die Steuerung des Verhältnisses von H₂ zu CO im Reduktionsgas kann ein Differenzdruck und damit die maximale Anlagenleistung und/oder eine Temperaturverteilung im Reduktionsaggregat gesteuert werden.

Erfindungsgemäß erfolgt im Reduktionsaggregat die Reduktion der Metalloxide zu dem metallisierten Material. Enthält das Reduktionsgas H₂ und CO, so verläuft die Reduktion der Metalloxide im Reduktionsaggregat mittels CO überwiegend exotherm und die Reduktion der Metalloxide mittels H₂ überwiegend endotherm. Bei der exothermen Reduktion wird Energie frei, bei der endothermen Reduktion wird Energie benötigt.

Durch die Steuerung des Verhältnisses von H₂ zu CO im Reduktionsgas ergibt sich damit der Vorteil, dass die Temperaturverteilung im Reduktionsaggregat gesteuert werden kann.

Eine weitere Ausführungsform des erfindungsgemäßen Verfahrens ist dadurch gekennzeichnet, dass der mengenmäßige Anteil des Tailgases im Reformerbrenngas mindestens 10 Volumsprozent beträgt.

In einer bevorzugten Ausführungsform des erfindungsgemäßen Verfahrens wird das Tailgas vor seiner Zufuhr zum Reformerbrenngas und/oder zum Ofenbrenngas mittels einer Tailgasheizvorrichtung auf eine Temperatur zwischen 200°C und 400°C, vorzugsweise auf eine Temperatur zwischen 250°C und 350°C, besonders bevorzugt auf eine Temperatur zwischen 280°C und 320°C gebracht.

Vorzugsweise wird das Tailgas vor seiner Zufuhr zum Reformerbrenngas und/oder zum Ofenbrenngas mittels eines Gas-Gas-Wärmetauschers auf eine Temperatur zwischen 200°C und 400°C, vorzugsweise auf eine Temperatur zwischen 250°C und 350°C, besonders bevorzugt auf eine Temperatur zwischen 280°C und 320°C gebracht.

Dadurch können die Temperatur der Reformerbrenngasflamme und die Temperatur der bei der Verbrennung des Ofenbrenngases entstehenden Ofenbrenngasflamme erhöht werden, wodurch einerseits ein stabilerer Betrieb der Brenner erreicht werden kann und andererseits eine höherere Tailgasmenge verbrannt werden kann.

In einer weiteren Ausführungsform des erfindungsgemäßen Verfahrens wird das Produktgas vor seiner Vorwärmung im Reduktionsgasofen auf eine Temperatur zwischen 200°C und 400°C, vorzugsweise auf eine Temperatur zwischen 250°C und 350°C, besonders bevorzugt auf eine Temperatur zwischen 280°C und 320°C gebracht.

Wird das Produktgas vor seiner Vorwärmung im Reduktionsgasofen auf eine Temperatur zwischen 200°C und 400°C, vorzugsweise auf eine Temperatur zwischen 250°C und 350°C, besonders bevorzugt auf eine Temperatur zwischen 280°C und 320°C gebracht, so reduziert dies den Verbrauch an Ofenbrenngas im Reduktionsgasofen.

In einer Ausführungsform des erfindungsgemäßen Verfharens weist das Tailgas einen CO₂-Gehalt von 60-80 Volumsprozent auf.

In einer weiteren Ausführungsform des erfindungsgemäßen Verfahrens weist das Tailgas einen Heizwert von 1000 bis 4000 Kilojoule pro Normkubikmeter auf.

Ein weiterer Gegenstand der vorliegenden Erfindung ist eine Vorrichtung zur Durchführung des erfindungsgemäßen Verfahrens umfassend
- ein Reduktionsaggregat mit einer Topgasleitung und einer Reduktionsgasleitung,
- einen Reformer, in den die Topgasleitung zur Zufuhr einer ersten Teilmenge des Topgases mündet, wobei der Reformer über die Reduktionsgasleitung mit dem Reduktionsaggregat verbunden ist,
- eine in die Topgasleitung mündende Zufuhrleitung zur Zufuhr von gasförmigen Kohlenwasserstoffen zur ersten Teilmenge des Topgases,
- zumindest ein dem Reformer zugeordneter Brenner mit einer Reformerbrenngasleitung,
- eine CO₂-Entfernungsvorrichtung mit einer von der Topgasleitung abzweigenden Recyclegasleitung zur Zufuhr einer zweiten Teilmenge des Topgases und einer Tailgasleitung zur Abfuhr eines CO₂-reichen Tailgases,
- einen Reduktionsgasofen mit einer in die Reduktionsgasleitung mündenden Zufuhrleitung, welcher über eine Produktgasleitung mit der CO₂-Entfernungsvorrichtung verbunden ist,
- zumindest ein dem Reduktionsgasofen zugeordneter Brenner mit einer Ofenbrenngasleitung,
wobei die CO₂-Entfernungsvorrichtung erfindungsgemäß als PSA-Anlage oder als VPSA-Anlage ausgebildet ist und die Tailgasleitung mit der Reformerbrenngasleitung und mit der Ofenbrenngasleitung verbunden ist.

Das Reduktionsaggregat ist vorzugsweise ein Direktreduktionsaggregat zur Herstellung von direkt reduziertem Eisen - DRI (direct reduced iron). Das bei der Reduktion der Metalloxide gebildete Topgas wird mittels der Topgasleitung aus dem Reduktionsaggregat abgezogen. Das Reduktionsgas wird dem Reduktionsaggregat mittels der Reduktionsgasleitung zugeführt. Die Vorrichtung umfasst weiter den Reformer, in den die Topgasleitung mündet. Mittels der Topgasleitung wird dem Reformer die erste Teilmenge des Topgases zugeführt. Der Reformer ist über die Reduktionsgasleitung mit dem Reduktionsaggregat verbunden. In die Topgasleitung mündet eine Zufuhrleitung zur Zufuhr von gasförmigen Kohlenwasserstoffen zur ersten Teilmenge des Topgases. Im Reformer befindet sich zumindest ein Brenner, dem mittels der Reformerbrenngasleitung das Reformerbrenngas zugeführt wird. Die Recyclegasleitung, welche von der Topgasleitung abzweigt, führt in die CO₂-Entfernungsvorrichtung. Über die Recyclegasleitung wird der CO₂-Entfernungsvorrichtung die zweite Teilmenge des Topgases zugeführt. Die CO₂-Entfernungsvorrichtung umfasst zusätzlich die Tailgasleitung zur Abfuhr des CO₂-reichen Tailgases. Der Reduktionsgasofen ist mit einer in die Reduktionsgasleitung mündenden Zufuhrleitung zur Zufuhr der zweiten Komponente des Reduktionsgases zum Reduktionsgas versehen. Der Reduktionsgasofen ist über die Produktgasleitung mit der CO₂-Entfernungsvorrichtung verbunden. Im Reduktionsgasofen befindet sich zumindest ein Brenner in den die Ofenbrenngasleitung mündet. Erfindungsgemäß ist die CO₂-Entfernungsvorrichtung als PSA-Anlage oder als VPSA-Anlage ausgebildet und die Tailgasleitung ist erfindungsgemäß mit der Reformerbrenngasleitung und mit der Ofenbrenngasleitung verbunden.

Vorzugsweise ist in der Topgasleitung eine Entstaubungseinrichtung zur Entstaubung des Topgases angeordnet. Die Entstaubungseinrichtung ist beispielsweise eine Nassentstaubung oder eine Trockenentstaubung oder eine Kombination beider.

Mittels der Tailgasleitung kann das Tailgas sowohl dem Reformerbrenngas als auch dem Ofenbrenngas zugeführt werden.

In einer Ausführungsform der erfindungsgemäßen Vorrichtung ist in der Zufuhrleitung, zwischen dem Reduktionsgasofen und der Mündung der Zufuhrleitung in die Reduktionsgasleitung, eine Verbrennungsvorrichtung mit einer in diese mündende Sauerstoffzufuhrleitung angeordnet.

In einer weiteren Ausführungsform der erfindungsgemäßen Vorrichtung sind in der Recyclegasleitung, zwischen der Abzweigung der Recyclegasleitung von der Topgasleitung und der CO₂-Entfernungsvorrichtung ein CO-Konvertierungsreaktor und/oder eine Abkühlvorrichtung angeordnet.

Eine andere Ausführungsform der erfindungsgemäßen Vorrichtung ist dadurch gekennzeichnet, dass in der Produktgasleitung, zwischen der CO₂-Entfernungsvorrichtung und dem Reduktionsgasofen eine Produktgasheizvorrichtung, insbesondere ein Gas-Gas-Wärmetauscher, angeordnet ist.

In einer weiteren Ausführungsform der erfindungsgemäßen Vorrichtung ist in der Tailgasleitung, zwischen der CO₂-Entfernungsvorrichtung und dem Reformer eine Tailgasheizvorrichtung, insbesondere eine Gas-Gas-Wärmetauschervorrichtung, angeordnet.

Die erste Teilmenge des Topgases wird vor der Zufuhr in den Reformer gegebenenfalls in einem mittels des Reformerabgases geheizten Rekuperator vorgeheizt.

Vorzugsweise ist in der Topgasleitung, zwischen dem Reduktionsaggregat beziehungsweise der Entstaubungseinrichtung und dem Reformer ein Prozessgasverdichter zur Verdichtung der ersten Teilmenge des Topgases angeordnet. Auch in der Recyclegasleitung ist vorzugsweise ein Recyclegasverdichter zur Verdichtung der zweiten Teilmenge des Topgases zwischen der Abzweigung der Recyclegasleitung von der Topgasleitung und dem CO-Konvertierungsreaktor angeordnet.

### Kurze Beschreibung der Zeichnung

Die Erfindung wird nachfolgend in beispielhafter Weise anhand der beigefügten Figur erläutert.

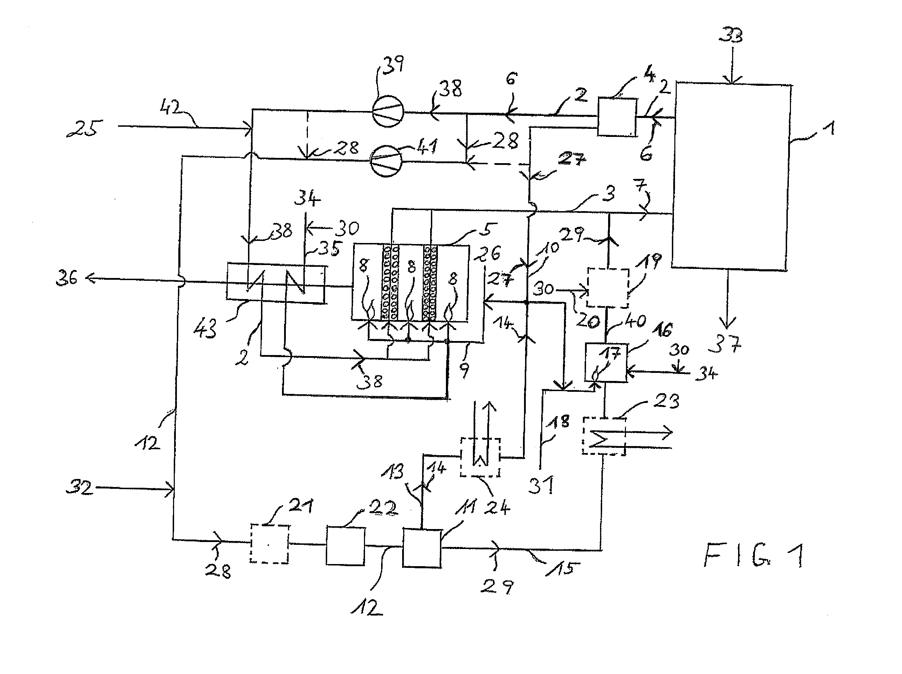

FIG 1 zeigt beispielhaft und schematisch ein erfindungsgemäßes Verfahren und eine erfindungsgemäße Vorrichtung zur Reduktion von Metalloxiden zu metallisiertem Material in einem Reduktionsaggregat.

### Beschreibung der Ausführungsform

FIG 1 zeigt beispielhaft und schematisch das erfindungsgemäße Verfahren und die erfindungsgemäße Vorrichtung zur Reduktion von Metalloxiden (33) in einem Reduktionsaggregat (1) zu metallisiertem Material, insbesondere zu direkt reduziertem Eisen (37), durch Reduktionsgas (7) unter gleichzeitiger Bildung eines Topgases (6). Das Topgas (6) wird mittels einer Topgasleitung (2) aus dem Reduktionsaggregat (1) abgezogen. Das Reduktionsgas (7) wird dem Reduktionsaggregat (1) mittels einer Reduktionsgasleitung (3) zugeführt. In der Topgasleitung (2) ist eine Entstaubungseinrichtung (4) zur Entstaubung des Topgases (6) angeordnet. Das entstaubte Topgas (6) weist eine Temperatur von etwa 65°C bis 80°C und einen Wasseranteil von etwa 17 Volumsprozent auf.

Die Herstellung einer ersten Komponente des Reduktionsgases (7) erfolgt durch katalytische Reformierung einer ersten Teilmenge (38) des Topgases (6) unter Zugabe von gasförmigen Kohlenwasserstoffen (25) in einem Reformer (5). Die gasförmigen Kohlenwasserstoffe (25) werden der ersten Teilmenge (38) des Topgases (6) mittels einer in die Topgasleitung (2) mündenden Zufuhrleitung (42) zugeführt. Dem Reformer (5) wird die erste Teilmenge (38) des Topgases (6) mittels der in den Reformer (5) mündenden Topgasleitung (2) zugeführt. Im Reformer (5) befindet sich zumindest ein Brenner (8) mit einer Reformerbrenngasleitung (9) zur Zufuhr des Reformerbrenngases (26). Dem Brenner (8) wird mittels der Zufuhrleitung (35) Luft (34), technisch reiner Sauerstoff (30) oder ein Gemisch daraus zugeführt. Die für die katalytische Reformierung der ersten Teilmenge (38) des Topgases (6) erforderliche Wärme wird durch Verbrennung des Reformerbrenngases (26) geliefert. Bei der katalytischen Reformierung der ersten Teilmenge (38) des Topgases (6) entsteht durch Verbrennung des Reformerbrenngases (26) mit der Luft (34) oder dem technisch reinen Sauerstoff (30) oder dem Gemisch daraus ein Reformerabgas (36). Anschließend wird dem Reduktionsaggregat (1) mittels der Reduktionsgasleitung (3) die katalytisch reformierte erste Teilmenge (38) des Topgases (6) als erste Komponente des Reduktionsgases (7) zugeführt.

Die Herstellung einer zweiten Komponente des Reduktionsgases (7) erfolgt durch Vorwärmung eines CO₂-armen Produktgases (29) in einem Reduktionsgasofen (16). Das CO₂-arme Produktgas (29) wird dabei auf eine Temperatur zwischen 400°C und 600°C vorgewärmt. Das CO₂-arme Produktgas (29) wird durch Entfernung von CO₂ aus einer zweiten Teilmenge (28) des Topgases (6) mittels einer CO₂-Entfernungsvorrichtung (11) gebildet. Die CO₂-Entfernungsvorrichtung (11) ist als PSA-Anlage oder als VPSA-Anlage ausgebildet. Die zweite Teilmenge (28) des Topgases (6) wird mittels einer in die CO₂-Entfernungsvorrichtung (11) mündenden Recyclegasleitung (12) in die CO₂-Entfernungseinrichtung (11) eingebracht. Das aus der CO₂-Entfernungseinrichtung (11) stammende CO₂-arme Produktgas (29) wird dem Reduktionsgasofen (16) mittels einer in den Reduktionsgasofen (16) mündenden Produktgasleitung (15) zugeführt. Das im Reduktionsgasofen (16) vorgewärmte Produktgas (29) wird mittels einer Zufuhrleitung (40), welche in die Reduktionsgasleitung (3) mündet, in die Reduktionsgasleitung (3) eingebracht. Gegebenenfalls befindet sich in der Zufuhrleitung (40) eine Verbrennungsvorrichtung (19), welche in der FIG 1 strichliert dargestellt ist. In dieser erfolgt eine partielle Oxidation des vorgewärmten Produktgases (29) mit technisch reinem Sauerstoff (30). Der Verbrennungsvorrichtung (19) wird der technisch reine Sauerstoff (30) mittels der Sauerstoffzufuhrleitung (20) zugeführt.

Die erste Teilmenge (38) des Topgases (6) wird vor der katalytischen Reformierung mittels eines in der Topgasleitung (2) angeordneten Prozessgasverdichters (39) verdichtet und anschließend mittels eines Rekuperators (43) vorgewärmt. Die zweite Teilmenge (28) des Topgases (6) wird mittels eines in der Recyclegasleitung (12) angeordneten Recyclegasverdichters (41) verdichtet. Die Recyclegasleitung (12) zweigt zwischen der Entstaubungseinrichtung (4) und dem Prozessgasverdichter (39) von der Topgasleitung (2) ab. Die Recyclegasleitung (12) kann in einer optionalen Ausführungsform auch nach dem Prozessgasverdichter (39) abzweigen - in der FIG 1 strichliert dargestellt, wobei der Recyclegasverdichter (41) dann auch entfallen kann.

Im Reduktionsgasofen (16) ist zumindest ein Brenner (17) mit einer Ofenbrenngasleitung (18) zur Zufuhr eines Ofenbrenngases (31) in den Brenner (17) angeordnet. Weiter kann dem Reduktionsgasofen (16) Luft (34), technisch reiner Sauerstoff (30) oder ein Gemisch daraus zugeführt werden. Die für die Vorwärmung des CO₂-armen Produktgases (29) im Reduktionsgasofen (16) erforderliche Wärme wird durch Verbrennung des Ofenbrenngases (31) geliefert.

Dem Reformerbrenngas (26) und dem Ofenbrenngas (31) wird mittels einer Tailgasleitung (13) ein bei der CO₂-Entfernung in der CO₂-Entfernungseinrichtung (11) anfallendes CO₂-reiches Tailgas (14) zugeführt.

Aus der Entstaubungseinrichtung (4) entspringt eine Topgasbrenngasleitung (10), welche mit der Reformerbrenngasleitung (9) beziehungsweise mit der Ofenbrenngasleitung (18) verbunden ist. Mittels der Topgasbrenngasleitung (10) wird dem Reformerbrenngas (26) und dem Ofenbrenngas (31) eine dritte Teilmenge (27) des Topgases (6) mit einer Temperatur von etwa 35°C bis 40°C zugeführt.

In der Recyclegasleitung (12) sind zwischen dem Recyclegasverdichter (41) und der CO₂-Entfernungseinrichtung (11) nacheinander ein CO-Konvertierungsreaktor (21) und eine Abkühlvorrichtung (22) angeordnet. Im CO-Konvertierungsreaktor (21) wird die zweite Teilmenge (28) des Topgases (6) einer CO-Konvertierungsreaktion unterzogen. Nach der CO - Konvertierungsreaktion beträgt die Temperatur der zweiten Teilmenge (28) des Topgases (6) zwischen 400°C und 500°C. Danach wird die zweite Teilmenge (28) des Topgases (6) in der Abkühlvorrichtung (22) auf eine Temperatur von unter 60°C abgekühlt. Mittels einer in die Recyclegasleitung (12) zwischen dem Recyclegasverdichter (41) und dem CO-Konvertierungsreaktor (21) in die Recyclegasleitung (12) mündenden Leitung wird der zweiten Teilmenge (28) des Topgases (6) vor der CO-Konvertierungsreaktion Wasserdampf (32) zugemischt. Der CO-Konvertierungsreaktor (21) kann auch entfallen. In dem Fall, dass kein CO-Konvertierungsreaktor (21) vorhanden ist, wird der zweiten Teilmenge (28) des Topgases (6) mittels einer in der FIG 1 strichliert eingezeichneten Leitung eine Teilmenge der dritten Teilmenge (27) des Topgases (6) zugemischt.

In einer Variante wird das Tailgas (14) vor seiner Zufuhr zum Reformerbrenngas (26) und zum Ofenbrenngas (31) mittels einer in der Tailgasleitung (13) angeordneten Tailgasheizvorrichtung (24) - in FIG 1 strichliert dargestellt - auf eine Temperatur zwischen 200°C und 400°C, vorzugsweise auf eine Temperatur zwischen 250°C und 350°C, besonders bevorzugt auf eine Temperatur zwischen 280°C und 320°C gebracht.

In einer weiteren Variante wird das Produktgas (29) vor seiner Vorwärmung im Reduktionsgasofen (16) mittels einer in der Produktgasleitung (15) angeordneten Produktgasheizvorrichtung (23) - in FIG 1 strichliert dargestellt - auf eine Temperatur zwischen 200°C und 400°C, vorzugsweise auf eine Temperatur zwischen 250°C und 350°C, besonders bevorzugt auf eine Temperatur zwischen 280°C und 320°C gebracht.

Zur Heizwertvergleichmäßigung des Tailgases (14) wird dieses vorzugsweise in einem in der FIG 1 nicht dargestellten Niederdruckgasspeicher gespeichert, bevor es dem Reformerbrenngas (26) und dem Ofenbrenngas (31) zugeführt wird.

In einer in FIG 1 nicht dargestellen weiteren Variante des erfindungsgemäßen Verfahrens kann auch die erste Teilmenge (38) des Topgases (6) vor seiner Reformierung im Reformer (5) einer CO - Konvertierungsreaktion in einem CO - Konvertierungsreaktor unterzogen werden.

Obwohl die Erfindung im Detail durch das bevorzugte Ausführungsbeispiel näher illustriert und beschrieben wurde, so ist die Erfindung nicht durch das offenbarte Beispiel eingeschränkt und andere Variationen können vom Fachmann hieraus abgeleitet werden, ohne den Schutzumfang der Erfindung zu verlassen.

### Liste der Bezugszeichen

- 1.: Reduktionsaggregat
- 2.: Topgasleitung
- 3.: Reduktionsgasleitung
- 4.: Entstaubungseinrichtung
- 5.: Reformer
- 6.: Topgas
- 7.: Reduktionsgas
- 8.: Brenner
- 9.: Reformerbrenngasleitung
- 10.: Topgasbrenngasleitung
- 11.: CO2-Entfernungsvorrichtung
- 12.: Recyclegasleitung
- 13.: Tailgasleitung
- 14.: Tailgas
- 15.: Produktgasleitung
- 16.: Reduktionsgasofen
- 17.: Brenner
- 18.: Ofenbrenngasleitung
- 19.: Verbrennungsvorrichtung
- 20.: Sauerstoffzufuhrleitung
- 21.: CO - Konvertierungsreaktor
- 22.: Abkühlvorrichtung
- 23.: Produktgasheizvorrichtung
- 24.: Tailgasheizvorrichtung
- 25.: gasförmige Kohlenwasserstoffe
- 26.: Reformerbrenngas
- 27.: dritte Teilmenge des Topgases
- 28.: zweite Teilmenge des Topgases
- 29.: Produktgas
- 30.: technisch reiner Sauerstoff
- 31.: Ofenbrenngas
- 32.: Wasserdampf
- 33.: Metalloxide
- 34.: Luft
- 35.: Zufuhrleitung
- 36.: Reformerabgas
- 37.: direkt reduziertes Eisen (DRI)
- 38.: erste Teilmenge des Topgases
- 39.: Prozessgasverdichter
- 40.: Zufuhrleitung
- 41.: Recyclegasverdichter
- 42.: Zufuhrleitung
- 43.: Rekuperator

## Patentansprüche

1. Verfahren zur Reduktion von Metalloxiden (33) zu metallisiertem Material in einem Reduktionsaggregat (1) durch Reduktionsgas (7) unter gleichzeitiger Bildung eines Topgases (6), umfassend die Herstellung einer ersten Komponente des Reduktionsgases (7) durch katalytische Reformierung einer ersten Teilmenge (38) des Topgases (6) unter Zugabe von gasförmigen Kohlenwasserstoffen (25) in einem Reformer (5), die Herstellung einer zweiten Komponente des Reduktionsgases (7) durch Vorwärmung eines CO₂-armen Produktgases (29) in einem Reduktionsgasofen (16), welches durch Entfernung von CO₂ aus einer zweiten Teilmenge (28) des Topgases (6) mittels einer CO₂-Entfernungsvorrichtung (11) gebildet wird, wobei die für die katalytische Reformierung der ersten Teilmenge (38) des Topgases (6) erforderliche Wärme durch Verbrennung eines Reformerbrenngases (26) geliefert wird, **dadurch gekennzeichnet, dass** die CO₂-Entfernungsvorrichtung (11) als PSA-Anlage oder als VPSA-Anlage ausgebildet ist und die für die Vorwärmung des CO₂-armen Produktgases (29) erforderliche Wärme durch Verbrennung eines Ofenbrenngases (31) geliefert wird, wobei dem Reformerbrenngas (26) und/oder dem Ofenbrenngas (31) ein bei der CO₂-Entfernung anfallendes CO₂-reiches Tailgas (14) zugeführt wird.

2. Verfahren nach Anspruch 1, **dadurch gekennzeichnet, dass** in einer Verbrennungsvorrichtung (19) eine weitere Erwärmung des im Reduktionsgasofen (16) vorgewärmten Produktgases (29) durch partielle Oxidation des Produktgases (29) mit technisch reinem Sauerstoff (30) erfolgt.

3. Verfahren nach einem der vorangegangenen Ansprüche, **dadurch gekennzeichnet, dass** die zweite Teilmenge (28) des Topgases (6) vor der Entfernung des CO₂ einer CO - Konvertierungsreaktion in einem CO - Konvertierungsreaktor (21) und/oder einer Abkühlung in einer Abkühlvorrichtung (22) unterzogen wird.

4. Verfahren nach einem der vorangegangenen Ansprüche, **dadurch gekennzeichnet, dass** der mengenmäßige Anteil des Tailgases (14) im Reformerbrenngas (26) mindestens 10 Volumsprozent beträgt.

5. Verfahren nach einem der vorangegangenen Ansprüche, **dadurch gekennzeichnet, dass** das Tailgas (14) vor seiner Zufuhr zum Reformerbrenngas (26) und/oder zum Ofenbrenngas (31) mittels einer Tailgasheizvorrichtung (24) auf eine Temperatur zwischen 200°C und 400°C, vorzugsweise auf eine Temperatur zwischen 250°C und 350°C, besonders bevorzugt auf eine Temperatur zwischen 280°C und 320°C gebracht wird.

6. Verfahren nach einem der vorangegangenen Ansprüche, **dadurch gekennzeichnet, dass** das Produktgas (29) vor seiner Vorwärmung im Reduktionsgasofen (16) auf eine Temperatur zwischen 200°C und 400°C, vorzugsweise auf eine Temperatur zwischen 250°C und 350°C, besonders bevorzugt auf eine Temperatur zwischen 280°C und 320°C gebracht wird.

7. Verfahren nach einem der vorangegangenen Ansprüche, **dadurch gekennzeichent, dass** das Tailgas (14) einen CO₂-Gehalt von 60-80 Volumsprozent aufweist.

8. Verfahren nach einem der vorangegangenen Ansprüche, **dadurch gekennzeichnet, dass** das Tailgas (14) einen Heizwert von 1000 bis 4000 Kilojoule pro Normkubikmeter aufweist.

9. Vorrichtung zur Durchführung eines Verfahrens nach einem der Ansprüche 1 bis 8, umfassend
- ein Reduktionsaggregat (1) mit einer Topgasleitung (2) und einer Reduktionsgasleitung (3),
- einen Reformer (5), in den die Topgasleitung (2) zur Zufuhr einer ersten Teilmenge (38) des Topgases (6) mündet, wobei der Reformer (5) über die Reduktionsgasleitung (3) mit dem Reduktionsaggregat (1) verbunden ist,
- eine in die Topgasleitung (2) mündende Zufuhrleitung (42) zur Zufuhr von gasförmigen Kohlenwasserstoffen (25) zur ersten Teilmenge (38) des Topgases (6),
- zumindest ein dem Reformer (5) zugeordneter Brenner (8) mit einer Reformerbrenngasleitung (9),
- eine CO₂-Entfernungsvorrichtung (11) mit einer von der Topgasleitung (2) abzweigenden Recyclegasleitung (12) zur Zufuhr einer zweiten Teilmenge (28) des Topgases (6) und einer Tailgasleitung (13) zur Abfuhr eines CO₂-reichen Tailgases (14),
- einen Reduktionsgasofen (16) mit einer in die Reduktionsgasleitung (3) mündenden Zufuhrleitung (40), welcher über eine Produktgasleitung (15) mit der CO₂-Entfernungsvorrichtung (11) verbunden ist,
- zumindest ein dem Reduktionsgasofen (16) zugeordneter Brenner (17) mit einer Ofenbrenngasleitung (18),
**dadurch gekennzeichnet, dass** die CO₂-Entfernungsvorrichtung (11) als PSA-Anlage oder als VPSA-Anlage ausgebildet ist und die Tailgasleitung (13) mit der Reformerbrenngasleitung (9) und mit der Ofenbrenngasleitung (18) verbunden ist.

10. Vorrichtung nach Anspruch 9, **dadurch gekennzeichnet, dass** in der Zufuhrleitung (40), zwischen dem Reduktionsgasofen (16) und der Mündung der Zufuhrleitung (40) in die Reduktionsgasleitung (3), eine Verbrennungsvorrichtung (19) mit einer in diese mündende Sauerstoffzufuhrleitung (20) angeordnet ist.

11. Vorrichtung nach einem der Ansprüche 9 oder 10, **dadurch gekennzeichnet, dass** in der Recyclegasleitung (12), zwischen der Abzweigung der Recyclegasleitung (12) von der Topgasleitung (2) und der CO₂-Entfernungsvorrichtung (11) ein CO-Konvertierungsreaktor (21) und/oder eine Abkühlvorrichtung (22) angeordnet sind.

12. Vorrichtung nach einem der Ansprüche 9 bis 11, **dadurch gekennzeichnet, dass** in der Produktgasleitung (15), zwischen der CO₂-Entfernungsvorrichtung (11) und dem Reduktionsgasofen (16) eine Produktgasheizvorrichtung (23), insbesondere ein Gas-Gas-Wärmetauscher, angeordnet ist.

13. Vorrichtung nach einem der Ansprüche 9 bis 12, **dadurch gekennzeichnet, dass** in der Tailgasleitung (13), zwischen der CO₂-Entfernungsvorrichtung (11) und dem Reformer (5) eine Tailgasheizvorrichtung (24), insbesondere eine Gas-Gas-Wärmetauschervorrichtung, angeordnet ist.
